# EUROPEAN PATENT SPECIFICATION

(11) **EP 3 586 647 B1**
(45) Date of publication and mention of the grant of the patent: **06.05.2026**
(21) Application number: 19186055.0
(22) Date of filing: 18.03.2016
(51) Int. Cl.: A23K 10/12, A23K 10/18, A23K 10/37, A23K 50/75, A23K 50/30, A23K 50/60, A23K 50/10

(54) **FERMENTED FOOD INGREDIENT**
FERMENTIERTE NAHRUNGSMITTELZUTAT
INGRÉDIENT ALIMENTAIRE FERMENTÉ

(30) Priority: 20.03.2015 BE 201505165
(43) Date of publication of application: 01.01.2020
(62) Divisional of application: 16161124.9
(73) Proprietor: NV Vanden Avenne Ooigem, 8710 Wielsbeke (BE)
(72) Inventor: Gouwy, Patrick Marcel Firmin Corneel, 8710 Wielsbeke (BE); Dieryckxvisschers, Frederik Dominiek, 8710 Wielsbeke (BE)
(74) Representative: V.O.

(56) References cited:
- WO-A1-2008/078878
- CN-A- 102 250 807
- CN-A- 103 027 186
- CN-A- 103 583 850

## Description

The present invention relates to a method for preparing a food product, which food product is a mixed feed; to a food product which is a mixed animal feed; to a food product for use in a prophylactic or therapeutic medical treatment of an animal; to a non-therapeutic use of a food product; and to a non-therapeutic method of producing a product, which product is meat.

In the current nutrition world, enterprises active in the food chain are continuously faced with the ever higher quality requirements imposed in the marketing of food products in combination with the wish for a highest possible efficiency, and as few environmentally harmful emissions as possible.

For feedingstuff manufacturers in particular, there is an ongoing search for upgrading a variety of by-products presented from the food industry to process them into high-grade stock feeds.

Within the feed world today, diverse process techniques are applied to vegetable base materials for the feed, ranging from milling, mixing, pressing, expanding and extruding base materials and/or base material mixtures to production of high-grade stock feeds.

Fermentation is also a known processing technique. Further, it is known to include micro-organisms to have a positive effect on a food or feed product, when consumed.

*E.g.* CN-A 103 583 850 relates to a preparation method of composite microecologics comprising *Bacillus licheniformis* and *Bacillus subtilis.* The composite microecologics is used for replacing antibiotics so as to solve existing problems such as abuse of antibiotics in breeding industry, generation of drug resistance, and antibiotic residual in meat products.

CN-A 103 027 186 relates to a fermented feed and a preparation method thereof. The fermented feed is prepared by fermenting bean pulp and/or corn gluten meal, bran, *Bacillus subtilis, Lactobacillus acidophilus, Enterococcus faecalis, Saccharomycetes,* brown sugar, yeast extract, monopotassium phosphate, neutral protease, acid proteinase and 15%-30% of water.

WO 2008/078878 A1 relates to fermented feeds for livestock farming with *Lactobacillus fermentum JS* (KCCM 10499) and a yeast (*Pichia kluyveri* or *Saccharomyces cerevisiae)* and a method for preparation thereof, which comprises fermentation of a mixture comprising said micro-organisms, rice bran, soy bean hulls and sesame dregs.

Seeds of grains, and by-products thereof, such as *kortmeel* (Dutch term, a protein- and starch-containing bran, hereinafter denoted as 'bran'), in particular wheat and wheat by-products, are the principal constituent of the greater part of compound feeds (mixed feeds). The bran is usually obtained as a by-product in the production of flour. It is a milling product consisting at any rate mainly of (fine) bran or (coarse) meal. Usually, the bran consists at least principally of fragments of the skin and of particles of grain from which the greater part of the endosperm has been removed. The bran, unlike bran per se, usually contains a significant amount of starch, and - according to COMMISSION REGULATION (EU) No 68/2013 of 16 January 2013 on the Catalogue of feed materials - it is compulsory to qualify the bran as starch- and crude fibre-containing. Middlings is a grain by-product that contains more endosperm than the bran does. Where bran per se is concerned, the compulsory declaration is merely 'crude fibre'.

The grains and by-products thereof form a mixture of carbohydrates (starch), proteins and fibres. Of (milled) grain or grain by-product, the availability of the carbohydrates and proteins for digestion is not complete. It is considered that this is to do with the formation of complexes between proteins and carbohydrates. Further, various grains contain one or more proteins, especially one or more gliadins or glutenins. These proteins (constituents of gluten) are insoluble in water. Partly due to their insolubility, they can cause health problems or be otherwise disadvantageous to the productivity in stock farming. They often lead to intestinal disorders, as a result of which the immune system and subsequently the health status may be affected. Wheat is a well known example of a widely used gliadin- and glutenin-containing grain that can lead to health problems.

Diarrhoea (scour) in piglets on a wheat diet, for instance, is a normally occurring phenomenon. Precisely because of the insoluble character of wheat protein, this protein is fermented in the small intestines by non-pathogenic and pathogenic flora. As a result, however, also toxic metabolites may be released which may give rise to intestinal disorders.

It is an object of the invention to provide a method for preparing a food product, which food product is a mixed feed, that can be used as an alternative to known methods.

In particular, it is an object to provide a food product respectively a method for preparing a food product that, optionally mixed with conventional ingredients for a mixed feed, contributes to a better health of an animal or that provides another advantageous effect, such as an effect chosen from the group of increasing reproductive capacity, increasing the growth rate, increasing the meat production rate, lowering mortality, increasing birth weight uniformity, increasing milk production (in case of use with a mammal), or increasing the egg production (in case of use with poultry).

It is further an object to provide a food product for use in a prophylactic or therapeutic medical treatment of an animal or a human.

One or more further objects that the invention contemplates making provision for in an embodiment will be apparent from the description hereinafter.

It has now been found that one or more of the objects mentioned are achieved by subjecting a starch-, protein-, and dietary fibre-containing food base material to a particular treatment, thereby obtaining a food ingredient that is mixed with other ingredients, to form a food product.

Accordingly, the invention relates to a method for preparing a food product according to claim 1.

Furthermore, the invention relates to a food product, which food product is a mixed animal feed, obtainable by a method according to claim 13.

Furthermore, the invention relates to the non-therapeutic use of a food product according to claim 19.

Furthermore, the invention relates to a non-therapeutic method for producing a product, which product is meat, according to claim 22.

The food ingredient used in a method according to the invention advantageously comprises a protein, fat, carbohydrate, mineral matter, crude cell material (fibre), lactic acid, colony-forming lactic acid bacteria, and colony-forming yeast cells, having
- a protein content of 10-30 wt. % , preferably 12-25 wt. %, based on dry matter;
- a fat content of 1-11 wt. %, preferably 3-8 wt. %, based on dry matter;
- a (digestible) carbohydrate content of 14-44 wt. %, preferably 18-33 wt. %, based on dry matter;
- a total mineral matter content (inorganic constituents) of 1-11 wt. %, preferably 3-8 wt. %, based on dry matter;
- a content of crude cell material (fibre) of 6-24 wt. %, preferably 8-18 wt. %, based on dry matter, and further
- a lactic acid content of at least 1 wt. %, drawn to the food ingredient, preferably 2-10 wt. %.

A food product according to the invention is in particular suitable for administration to a farmed animal or pet animal, more particularly as food or food supplement for a farmed animal.

In particular, a food product according to the invention is administered to an animal for one or more of the following reasons: for increasing reproductive capacity, for increasing the growth rate, for increasing the meat production rate, for lowering mortality, for increasing birth weight uniformity, for increasing the milk production (in case of use with a mammal), or for increasing the egg production (in case of use with poultry).

In an embodiment, the invention relates to a method for producing meat, in which a farmed animal is fed with a food or food ingredient according to the invention, and the fed animal (after sufficient growth) is slaughtered, the meat being thereby obtained.

In a further embodiment, the food product of the invention is used in a method for producing milk, in which a female farmed animal (in particular dairy stock) is fed with a food product according to the invention, and the animal is milked at some point after feeding.

In a further embodiment, the food product of the invention is used in the production of eggs, whereby female poultry is fed with a food product according to the invention, the fed poultry is allowed to lay one or more eggs, which are thereupon taken away from the poultry.

The produced milk, meat or eggs can thereupon be processed further, for instance packaged, in a conventional manner.

In a specific embodiment, a food product according to the invention is used by administering it to a farmed animal or pet animal for lowering manure production, reducing greenhouse gas emission (in particular of carbon dioxide and/or methane) or reducing the nitrogen emission.

Furthermore, a food product according to the invention in an embodiment of the invention is administered to a farmed animal or pet animal for reducing the use of medicaments, such as antibiotics.

In an embodiment, a food product according to the invention is for use in a prophylactic or therapeutic medical treatment of an animal, in particular a farmed animal or a pet animal, or a human. Preferably, the medical treatment comprises a treatment of a disorder in the gastrointestinal tract, in particular, for example, coeliac disease, or small intestinal bacterial overgrowth (SIBO), or the food ingredient or food is intended for increasing intestinal health in general. In a particular embodiment, the food product according to the invention is intended for increasing a positive effect on the action of the immune system. Thus, the food product may be intended for use in the prophylactic or therapeutic treatment of a disease of the immune system, an inflammation or an infection.

As is illustrated in the Examples, in particular good results have been obtained in stock farming applications, such as in the breeding of baby piglets, fattening pigs, sows, fryers, and laying hens.

In particular, the present invention has its effect on improved technical performances (such as reproduction, growth, lowered feed consumption, lower emission of environmentally unsound nutrients), in tandem with an improved health status (including lower risk of residues as a result of treatment, lower animal daily dosage) in animals, especially in farmed animals.

Without being bound to theory, it is suspected that one or more effects that can be achieved by administration of a food product according to the invention are connected with the changed composition as a result of the fermentation, such as a better digestibility of the food ingredient or at least in certain cases even the food as such (perhaps as a result of probiotic activity in the food), for instance by the break-up of complexes of protein and carbohydrate; the presence (production) of one or more organic acids (lactic acid, butyric acid, propionic acid, acetic acid) which can have a favorable effect on intestinal health or even health overall; the presence (production) of one or more amino acids; the presence (production) of carbon compounds that can be readily absorbed, a relatively low sugar content, the breakdown of proteins that may present health issues, such as gluten or other proteins that at least particular animals or humans are food-intolerant of or allergic to. At least for particular base materials, in particular for gliadin-containing and glutenin-containing grain products, such as wheat products, the inventors have indications that these proteins are transformed by a controlled fermentation step into specific readily absorbable metabolites, among which different amino acids, organic acids or readily absorbable carbon compounds. These can directly or indirectly influence the health of the animal or human or (especially with animals) also improve the technical performances.

Because of a continuous relation between GALT (gut-associated lymphoid tissue) and BALT (bronchi-associated lymphoid tissue) there is a possible effect not only on intestinal health but also on general health. This is also, in part, a possible explanation of the better technical performances. The animals need to spend less energy on maintenance and the immune system.

Having regard to the positive health effects in, for example, pigs and chickens, the inventors further realize that the present invention can also accomplish a positive effect towards an increased health in humans in general, and an increased intestinal health in particular.

The term 'or' is herein understood to mean 'and/or', unless this is specified otherwise or it appears from the context that the term is being used restrictively to indicate that exactly one should be chosen from a number of alternatives.

The term 'a' is herein understood to mean 'at least one' unless this is specified otherwise or it appears from the context that the term is being used restrictively to indicate that it's about 'exactly one'.

When a noun is used in singular, this is to be taken to mean that the plural is also included, unless this is specified otherwise or it appears from the context that the term is being used restrictively to indicate that it's about 'exactly one'.

The terms '(at least) substantially' and 'essentially' are generally used to indicate that something has the general character, appearance or the general function of what the terms relate to. In case of a quantifiable feature, these terms are commonly used to indicate that the feature amounts to more than 50%, in particular more than 80%, more particularly at least 90%, more particularly at least 95%, still more particularly at least 98% or at least 99% of the maximum of that feature.

When the term 'approximately' is used for a parameter, this is at least understood to mean a margin of at most -10 % to +10 %, around the value mentioned, in particular a margin of at most - 5% to + 5%, around the value mentioned, more particularly a margin of at most -2% to + 2%, around the value mentioned.

Unless specified otherwise, a percentage is understood to be the percentage based on the total.

Unless specified otherwise or apparent otherwise from the context, a percentage is understood to be the weight percentage (wt. %).

A food ingredient is prepared in accordance with the invention with a method comprising a fermentation step. Fermentation is the conversion of a biological substance (substrate) with the help of a microorganism. Fermentation may be done in the absence of oxygen (anaerobic) or in the presence of oxygen.

As far as known, fermentation of fibre-containing fractions is not yet deployed today as an industrial process step in the production of dry animal food (production of feed meal or feed pellets), especially because moist fermented products are difficult to mix and/or pump within an industrial feed production environment.

The inventors have now found that it is possible to prepare a suitable food ingredient by fermenting a starch-, protein-, and nutrient fibre-containing food base material with a specific combination of different microorganisms - namely, a yeast and a lactic acid-producing bacterium - in a mixture that further contains water and possibly one or more other ingredients.

Surprisingly, it has been found possible to carry out the fermentation in a suitable manner in a mixture that is thick-viscous, i.e., pumpable but not free-flowing, i.e., it may be form-retaining in the absence of external forces, apart from gravity. As a result, a fermented food ingredient is obtained that is suitable to be used in existing installations for the preparation of solid (dry) food products, in particular mixed feeds, requiring relatively little if any energy to be consumed to dry the fermented mixture sufficiently prior to mixing, or for sufficient drying after mixing with any other food ingredient(s). The viscosity of the mixture that is fermented or of the food ingredient in accordance with the invention is at least 10,000 mPa.s (cP), preferably 15,000 to 50,000 mPa.s (cP), in particular from 20,000 to 40,000 mPa.s (cP), more particularly from 25,000 to 35,000 mPa.s (cP). The specified value of the viscosity is the value as measurable utilizing a rotation Viscosimeter at a temperature of 25 °C. A suitable viscosimeter is an Anton Paar MCR Rheometer MCR 102, with a rotor blade width of 24 mm, whereby the rotor blade is placed in a circular cylindrical 100 ml pot (diameter 54 mm) filled with the mixture to be measured, and whereby measuring is done with a rotation speed of 15 rpm.

The viscosity of a fermented product made according to the invention is usually lower than that of a comparable unfermented base material (in a same mixing ratio with water). This facilitates processing of the fermented product, in particular pumpability.

Preferably, fermentation is carried out on a mixture in which the water is at least substantially bound to the food ingredient, more preferably the water activity is 1.00 or less, particularly preferably in the range of 0.95-1.00.

The weight ratio of food base material to water in the mixture which is subjected to the fermentation step is usually in the range of 1:1 to 1:5, in particular in the range of 1:1 to 1:4. For a good pumpability or stirrability/scoopability during or after fermenting, the weight ratio of food base material is preferably at least 1:2, more preferably up to about 1:3.

The food base material content in the mixture is usually 20-50 wt. %, preferably 22-35 wt. %, in particular 25-30 wt. %. Preferably, in accordance with the invention a sufficient amount of food base material is used that takes up essentially all water. If desired, another food ingredient may be admixed which has a higher water uptake capacity.

All employed base materials and additives used in a method according to the invention or a product according to the invention are usually GRAS, preferably recognised for specific use in the feed world, or in the case of a human application, recognised for human application.

Examples of optional ingredients are antifungal agents, water activity lowering agents (in general water-binding polymers, for example a lignosulfate). The total content of ingredients other than water, the food base material and the microorganisms, if present, is usually less than 10 wt. %, in particular less than 5 wt. %, more particularly less than 1 wt. %.

The food ingredient that is obtained is pumpable. For a good pumpability, the dry matter content is at least approximately 20 wt. %. Preferably, the dry matter content is in the range approximately 22 wt. % to approximately 30 wt. %, particularly preferably approximately 25 wt. % to approximately 28 wt. %. If desired, the fermented mixture having a moisture content higher than desired may be dried to thereby obtain a food ingredient having a desired moisture content.

The mixture is preferably obtained by first mixing the microorganisms mentioned with the desired amount of water and then contacting the water with the base material. This may usually be done without an active mixing step by first charging a mixture of the microorganisms into the fermentation reactor and then adding the base material thereto. The base material, as a rule, will sufficiently suck up the water with the microorganisms. If desired, during fermenting, active mixing may be done, for example by stirring, pumping or scooping. This may be beneficial to a homogeneous fermentation. In addition, it may contribute to the avoidance of unwanted fungal growth. Optionally, an antifungal agent may be added.

The fermentation reactor can be a container, vat or other construction in which the mixture can be held. For example, a metal or plastic box, a tank reactor or a silo are suitable. The reactor is usually not closed off airtightly, in order that during the fermentation process the CO₂ formed can be discharged into the atmosphere.

The starch-, protein-, and nutrient fibre-containing food base material is usually a milled product, such as a meal or a bran (wheat bran).

As a base material, a milled grain or milled grain by-product is particularly suitable, in particular a bran. The protein of this base material contains gluten which in itself can contain gliadins and glutenins. A positive effect has been found on the technical performances and on the health in farmed animals when such a base material was started from. The grain or grain by-product, respectively, is preferably selected from the group of wheat, rye, barley, spelt, wheat by-product, rye by-product, barley by-product and spelt by-product, . Particularly good results have been attained with wheat bran, not only regarding the technical performances but also regarding the health of farmed animals. On the ground of this, the inventors conclude that other starch-, protein-, and fibre-containing base materials based on wheat are also extremely suitable as base material. Moreover, it is suspected that positive effects according to the invention can also be achieved, in particular, with other base materials from the Triticeae tribe, such as barley, rye, spelt, and by-products, such as bran, of barley, rye or spelt.

As lactic acid-producing bacteria, *Lactobacillus* bacteria are used in a fermentation method according to the invention, and incorporated in a product according to the invention. In addition to the colony forming *Lactobacillus casei* bacteria and the colony forming *Lactobacillus plantarum,* other *Lactobacillus* in particular include those chosen from the group consisting of *L. acetotolerans, L. acidifarinae, L. acidipiscis, L. acidophilus, L. agilis, L. algidus, L. alimentarius, L. amylolyticus, L. amylophilus, L. amylotrophicus, L. amylovorus, L. animalis, L. antri, L. apodemi, L. aviarius, L. bifermentans, L. brevis, L. buchneri, L. camelliae, L. catenaformis, L. ceti, L. coleohominis, L. collinoides, L. composti, L. concavus, L. coryniformis, L. crispatus, L. crustorum, L. curvatus, L. delbrueckii, L. delbrueckii subsp. bulgaricus, L. delbrueckii subsp. lactis, L. diolivorans, L. equi, L. equigenerosi, L. farraginis, L. farciminis, L. fermentum, L. fornicalis, L. fructivorans, L. frumenti, L. fuchuensis, L. gallinarum, L. gasseri, L. gastricus, L. ghanensis, L. graminis, L. hammesii, L. hamsteri, L. harbinensis, L. hayahitensis, L. helveticus, L. hilgardii, L. homohiochii, L. iners, L. ingluviei, L. intestinalis, L. jensenii, L. johnsonii, L. halixensis, L. kefiranofaciens, L. kefiri, L. himchii, L. kitasatonis, L. kunkeei, L. leichmannii, L. lindneri, L. malefermentans, L. mali,L. manihotivorans, L. mindensis, L. mucosae, L. murinus, L. nagelii, L. namurensis, L. nantensis, L. oligofermentans, L. oris, L. panis, L. pantheris, L. parabreuvis, L. parabuchneri, L. paracollinoides, L. parafarraginis, L. parakefiri, L. paralimentarius, L. paraplantarum, L. pentosus, L. perolens, L. pontis,L. psittaci, L. rennini, L. reuteri, L. rhamnosus, L. rimae, L. rogosae, L. rossiae, L. ruminis, L. saerimneri, L. sakei, L. salivarius, L. sanfranciscensis, L. satsumensis, L. secaliphilus, L. sharpeae, L. siliginis, L. spicheri, L. suebicus, L. thailandensis, L. ultunensis, L. vaccinostercus, L. vaginalis, L. versmoldensis, L. vini, L. vitulinus, L. zeae* and *L. zymae.*

Particularly good results have been obtained with a food ingredient where both *L. casei* and *L. plantarum* have been used for the fermentation, and with a food product comprising a food ingredient according to the invention that contains these *Lactobacilli.*

The mixture that is provided contains usually - at least at the beginning of the fermentation - at least approximately 50, preferably at least approximately 1 x 10² colony-forming lactic acid-forming bacteria per ml of mixture.

The number of bacteria can increase considerably during the fermentation. Usually, the mixture contains at least at some point during the fermentation, preferably in any case at the end of the fermentation, at least 0.5 x 10⁸ colony-forming units of lactic acid-forming bacteria per ml of mixture, preferably 1 x 10⁸ to 10 x 10⁸ colony-forming units of lactic acid-forming bacteria, in particular *Lactobacilli,* per ml of mixture, particularly preferably 2 x 10⁸ to 5 x 10⁸ colony-forming units of lactic acid-forming bacteria, in particular *Lactobacilli,* per ml of mixture.

In addition to the *Lactobacilli,* optionally, one or more other lactic acid-producing bacterial strains may be deployed, in particular *Bifidobacteria,* of which *B. bifidum, B. Adolescentis, B. Lactis* and *B. infantis* are examples of lactic acid-forming bacteria with a probiotic activity.

In addition to the colony-forming *Saccharomyces cerevisiae,* one or more further yeast usually chosen from the group of *Saccharomycetaceae; Kluyveromyces; Pichia, Zygosaccharomyces,* and *Brettanomyces* may be present. In addition to said *Saccharomyces cerevisiae* in particular a *Saccharomyces* chosen from the group consisting of *S. bayanus* and *S. boularidii* may be present. Good results have been achieved with *Saccharomyces cerevisiae.*

The mixture that is provided contains usually - at least at the beginning of the fermentation - at least approximately 5, preferably at least approximately 10 colony-forming yeast cells per ml of mixture.

The number of yeast cells can increase considerably during the fermentation. Usually, the mixture contains at least at some point during the fermentation, preferably in any case at the end of the fermentation, at least 0.5 x 10⁶ colony-forming units of yeast per ml of mixture, preferably 2 x 10⁶ to 10 x 10⁶ colony-forming units of yeast per ml of mixture, particularly preferably 2 x 10⁶ to 5 x 10⁶ colony-forming units of yeast per ml of mixture.

It is suspected that the lactic acid-producing bacterium and the yeast have a positive effect on one another. In that regard, in particular, the following is considered: The starch hydrolysis and the pH lowering as a result of acid production by the bacterial cells work positively for the development of yeast cells. The yeast cells, at least in one embodiment, produce particular vitamins and amino acids which can serve as substrate for the growth of bacterial cells. This can contribute to a faster production of the food ingredient due to a higher fermentation rate, or to a higher content of colony-forming cells in the final product. In addition, the yeast cells and lactic acid-producing bacteria together have a preservative effect on the food ingredient or food according to the invention.

The fermentation is carried out at a temperature at which the microorganisms are active, for example, at approximately the ambient temperature. Usually, the fermentation temperature is in the range of 5-45 °C. Preferably, the temperature is 40 °C or lower, more preferably 35 °C or lower. Preferably, the temperature is 10 °C or higher. For a rapid fermentation the temperature is more preferably approximately 20 °C or higher, in particular approximately 25 °C or higher, more particularly approximately 30 °C.

The desired fermentation duration depends on the temperature, the nature of and the content of the microorganisms, and the desired effects on the composition of the mixture, such as the breakdown of components of the base material (for example, carbohydrates, protein) and the formation of components by the bacteria, e.g. an organic acid, and by yeasts, e.g. an amino acid, vitamins or particular fats/fatty acids. Usually, the desired fermentation is realized within 6 hours to 5 days, in particular 12 hours to 4 days. A relatively short fermentation duration is not only desired for reasons of production capacity, but also makes it easier to prevent undue growth of unwanted bacteria or fungi. If within 4 to 5 days the desired fermentation has not been realized yet, fermentation may be continued for one or more days to arrive at the desired product. At a sufficiently high temperature (in particular above 20 °C), a fermentation duration of approximately 3 days or less is usually sufficient. Especially at a temperature of approximately 30 °C good results have been achieved within approximately 24 hours.

In practice, good results have been achieved with a fermented food ingredient that is obtainable by continuing the fermentation for a period that is necessary to have the pH, as measured in the mixture with a pH electrode, fall to less than 4.00. Preferably, the pH of the fermented food ingredient is 3.95 or less. The pH is not only an indication of the extent of fermentation, but a pH of 4.00 or lower is also favorable to the microbial quality of the product, because such a low pH is unfavorable to many pathogens. The lower limit is not particularly critical, as long as the ingredient remains suitable for consumption by the intended animal or humans. Usually, the pH is higher than 2, preferably 3.0 or higher, more preferably 3.5 or higher, in particular 3.7 or higher.

A food ingredient used according to the invention preferably comprises 12-25 wt. % of protein based on dry matter. Preferably, the protein content based on dry matter is lowered with respect to the base material used for fermentation, in particular by at least 2 %, more particularly by 5-15 %.

A food ingredient used according to the invention preferably comprises 3-8 wt. % of fat, based on dry matter. As a result of the fermentation, the fat content based on dry matter may be increased with respect to the base material, in particular by at least 3 %, more particularly by 5-15 %.

A food ingredient used according to the invention preferably has a (digestible) carbohydrate content of 18-33 wt. %, based on dry matter. The content of sugars (monosaccharides, disaccharides) based on dry matter is usually low with respect to the sugar content of the base material used for the fermentation. In particular, it is at least 25 % lower, more particularly 50-80 %. Preferably, the food ingredient contains sugar and starch in a weight ratio of sugar to starch of at most 0.25:1, in particular from 0.05:1 to 0.20:1.

The content of crude cell material (fibre) based on dry matter is preferably 8-18 wt. %. Depending on the fibre material (especially the extent to which it is fermentable by the microorganisms used) and any decrease of the total dry matter content, the content of fibres based on dry matter can remain approximately equal, increase or decrease. Usually, there is a relative rise of the fibre content, with respect to the base material.

The food ingredient can contain inorganic (mineral) substances, for example in the range of 1-11 wt. %, preferably 3-8 wt. % based on dry matter.

The food ingredient contains colony-forming lactic acid bacterial cells and colony-forming yeast cells, preferably in an amount in a range as specified above for the mixture that is fermented.

Usually, a food ingredient used according to the invention contains lactic acid, preferably at least 1 wt. % of the fermented product, more preferably 2-10 wt. % based on the fermented product.

In at least some embodiments the food ingredient comprises, in addition to lactic acid, one or more other organic acids, in particular chosen from the group of acetic acid, propionic acid and butyric acid. Organic acids can have a preservative action. Organic acids such as lactic acid, butyric acid or propionic acid have a positive effect on the intestinal health, for example on the epithelium of the colon.

The food ingredient can also contain free amino acids. The free amino acid composition may change quantitatively or qualitatively as a result of the fermentation, depending on the microorganisms used and base material used.

The food ingredient is pumpable, at least directly after being obtained. The (pumpable) food ingredient usually has a water activity of more than 0.72, in particular in the range of 0.95 to 1.00. In a specific embodiment, the food is dried and/or processed to form a granular, powdered or pelleted food ingredient.

Good results have been achieved with a food ingredient that is used for the industrial manufacture of a mixed feed, which is a complete food. The preparation of the mixed feed can be carried out in apparatus known per se, by mixing the food ingredient with other (conventional) ingredients for the food, in particular a mixed feed (a dry animal feed which is regarded as concentrate feed). A dry food product according to the invention is usually a product having a water activity of at most 0.75, in particular in the range of 0.65-0.74, more particularly in the range of 0.68-0.72. Highly suitable is a method whereby the food is processed to form powder, pellets, granules, fragments or other granular material. Suitable processing methods are methods known per se. Powdered products may be obtained, for example, by spray-drying, preferably under mild temperature conditions with a view to preserving a colony-forming fraction of the microorganisms, or freeze-drying. Through the invention, it has been found possible to obtain a powdered product (meal) having a high content of said colony-forming microorganisms. The powdered product can be simply mixed into a conventional feed.

Extrusion and pressing are suitable for granules, fragments, pellets and other relatively large granular products. As regards pressed products, in particular good results have been achieved with a method whereby the ingredients for the food are mixed, then subjected to an expansion step and then pressed. The expansion step prior to pressing is of benefit to the firmness of the granular material. This method has been found suitable to obtain a dry food having sufficient colony-forming bacterial cells and yeast cells.

The food ingredient used according to the invention can be combined in a relatively small amount with the other food ingredients to have a positive effect already. Usually, the content of the food ingredient in a food product (obtained) according to the invention is at least 0.1 wt. %, preferably at least 0.3 wt. %, more preferably approximately 0.5 wt. % or more, in particular approximately 1.0 wt. % or more, drawn to the dry weight of the food ingredient and the total weight of the food, in particular a dry food, preferably a mixed feed. The upper limit is especially determined by practical factors such as an acceptable flavour and odour for the animal or the human it is presented to and the maximum allowable water activity especially in the case of a dry end product and the content above which little or no extra positive desired effect occurs. Usually, the content of the food ingredient used according to the invention is 5 wt. % or less, preferably 4 wt. % or less, more preferably 2 wt. % or less, in particular 1.5 wt. % or less, drawn to the dry weight of the food ingredient and the total weight of the food, in particular in the case of a dry mixed feed.

Good results have been obtained with a farmed animal feed, namely a mixed feed for farmed animals.

In a preferred embodiment, the feed is a pig feed, in particular a pig mixed feed. As shown in the Examples, in particular good results have been obtained with a piglet feed, with a fattening pig feed and with a sow feed according to the invention.

In another preferred embodiment, the feed is a rumination feed, in particular a rumination mixed feed, more preferably a cattle feed. Goat feed and sheep feeds are other examples of rumination feeds according to the invention. More specific embodiments of rumination feeds are feeds for young (not full-grown) animals, such as calf feeds; dairy cattle feeds; and feeder cattle feeds.

In another preferred embodiment, the feed is a poultry feed, more specifically for production of meat or eggs. As shown in the Examples, in particular good results have been obtained with fryer feeds and laying hen feeds.

In a specific embodiment, the feed is a horse feed.

In a specific embodiment, the food is a pet animal food, preferably chosen from the group of dog feeds, cat feeds, rodent feeds, bird feeds, and horse feeds.

In a method of the invention preferably a food product is made containing at least 0.01 wt. % lactic acid, based on the total weight. In a further preferred embodiment, the food product according to the invention contains 0.05-0.5 wt. % of lactic acid, based on the total weight.

A food product according to the invention preferably contains at least 0.5 x 10⁵ colony-forming lactic acid bacterium units per gram of food, more preferably 1 x 10⁵ to 160 x 10⁵, in particular from 5 x 10⁵ to 100 x 10⁵.

A food according to the invention preferably contains at least 0.5 x 10³ colony-forming yeast cell units per gram of food, preferably 1 x 10³ to 160 x 10³, in particular from 5 x 10³ to 100 x 10³.

The invention will now be illustrated in and by the following examples.

### Example 1: preparation of fermented food:

In 3 parts of water (30 °C) in a plastic tank *Lactobacillus plantarum* cells (approximately 1 x 10² colony-forming cells/ml), *Lactobacillus casei* cells (approximately 10 colony-forming cells/ml) and *Saccharomyces cerevisiae* cells (approximately 10 colony-forming cells/ml) were mixed. To the mixture, 1 part of wheat bran was added. The tank was covered with a loose lid. After 24 hours a mixture with a pH of less than 4.00 had been obtained.

The experiment was repeated in a number of charges. In each case the obtained fermented food ingredient had a dry matter content in the range of 25-28 wt. % and was well pumpable in an installation for industrial manufacture of a mixed feed.

The experiment was also repeated in a non-temperature conditioned space, where the temperature was approximately 17 °C or approximately 19 °C or approximately 20 °C. Under those conditions it proved possible to obtain a fermented product having a pH in the range of 3.7-3.99 within 3-7 days.

### Example 2: digestibility test

With an *in vitro* experimental digestion model the protein digestibility and the starch digestibility were compared of fermented wheat bran according to the invention and the corresponding unfermented wheat bran.

As an indication, CVB Productschap Veevoeder (www.pdv.nl) uses the following VCRE figures as a standard for the bran:

| | |
|---|---|
| ruminants : | VCRE 76 %, |
| pigs : | VCRE 66 % |
| table chickens : | VCRE 71 % |

The inventors found the following figures in the protein digestion test (cf. pigs VCRE) :
For pure wheat bran:
   VCRE was 64.2 % after 3 hours and 69.2 % after 5 hours
For fermented bran product #1 according to the invention (pH 3.99, fermentation at approx. 19 °C):
   VCRE after 3 hours 68 % and VCRE after 5 hours 74.6 %.

For fermented bran product #2 according to the invention (pH 3.94, fermentation at approx. 17 °C): VCRE after 3 hours 64.9 % and VCRE after 5 hours 72.3 %.

Accordingly, an improvement in protein digestibility of 6 to 8% was demonstrable.

Also, an accelerated starch digestibility was observed. Of the pure bran, 100% of the starch was digested after 2.2 hours. Of fermented bran product #1, 100% of the starch was already digested after 1.9 hours. Of fermented bran product #2, 100% of the starch was already digested after 1.4 hours.

### Example 3: preparation of mixed feed:

Various mixed feeds were prepared for, respectively: baby piglets, fattening pigs, sows, fryers and laying hens. For the preparation, 2 wt. % of fermented food ingredient (25-28 % dry matter), as obtained by a method described in Example 1, were mixed with other - conventional - mixed feed ingredients for the respective target groups.

The obtained mixture was either used as meal feed or processed to form mixed feed granules, by subjecting the obtained mixture in succession to an expansion step and a pressing step, whereby the mixed feed granules were obtained.

### Example 4: baby piglet feeds

Baby piglet feeds are mostly very expensive feeds due to the specific requirements regarding protein and starch digestibility. Moreover, the cultivation of baby piglets is a very sensitive phase, certainly so from birth to end of battery period. Many farms often cannot bridge this phase without extra antimicrobial agents.

### Test description:

By admixing just 2 wt. % of the fermented wheat by-product (bran meal) the inventors were enabled to omit the more expensive commercial feeds and raise piglets from birth to end of battery period with a minimum of medication, on just one baby piglet feed.

Technical results are unequivocally very positive.

In comparison with a standard feed, piglets were able to add about 4 to 5 kg more meat in eight weeks. Mortality rates were very low and moreover uniformity of the piglets was raised enormously.

The greatest difference was seen in intake of the feed. Mostly, intake is limiting in these animals because of an as yet insufficiently developed enzyme system. Through the invention it proved possible to have all animals eat more of a feed with a lower energy and protein density, with a better manure score, and with fewer gut disorders. Notably, moreover, less feed per piglet was needed to come to a piglet with a sufficient delivery weight.

The test formulation Baby V 229 2 contained 2 % of fermented bran.

Growth per day was 386 grams compared to 326 grams/day without product, that is, an improvement by 18 %. The feed consumption ended at 1.507 compared to 1.798, that is, a 16.2 % improvement in efficiency. The reject percentage fell to 0.84 % compared to 2.67 % in the reference group, that is, a decrease of 68.5 %.

| **Table: test figures** | Reference feed | Feed with 2% fermented bran |
|---|---|---|
| Number of piglets | 187 | 592 |
| Average stalling period (days) | 59 | 48 |
| Average delivery weight (kg) | 25.6 | 24.9 |
| Growth/day (grams/day) | 326 | 386 |
| Percentage of rejects (death) | 2.67 | 0.84 |
| Feed consumption per surviving piglet | 34 | 28 |
| Feed conversion | 1.8 | 1.5 |

### Example 5: meat pig feeds

### Test description:

2% of the fermented wheat by-product according to Example 3 was mixed into pig feeds (granule) that were supplied to animals from a weight of about 30 kg through to the slaughterhouse weight.

Through this incorporation of just 2% it was possible to compose lower density feeds (both in protein and in energy) that had a positive effect on growth and feed conversion. Compared with a reference group that were fed the same feed but not including the 2 % admixed fermented wheat by-product, an efficiency improvement (calculated on the required feed) of 5.7 % was found. In addition, it was found that the food according to the invention, in contrast to effects of totally fermented slop feeds as described in the literature, had no adverse effect on the carcase quality. In illustration: as a measure for the carcase quality, the market value can be determined and compared with the market value of pigs fed with conventional feed. The market value of the carcases of pigs fed by the invention was found to be about 4 euro cents higher per kg than that of a normal pig, approximately 17 euro cents higher than Danis, and approximately 21 cents higher than Westvlees; Danis and Westvlees are basic prices for pigs in Flanders. This means that the carcases belonged to the better classes (in general, the market value for top pigs is at most 23 cents above the Westvlees basic price).

### Example 6: sow feeds

With sows, today, three problems are limiting for a profitable production.

In early gestation, the amount of methyl donors is limiting for obtaining a proper development of placenta and fetus, as a result of which, due to such deficiency, often non-uniform birth weights are obtained.

In late gestation, the amount of energy and amino acids is limiting for producing sufficient vital and viable piglets.

In lactation and around farrowing, the amount of colostrum (beestings) is limiting for the number of piglets born, resulting in an increased proportion of newborn piglets suffering from hard-to-treat diarrhoea.

All three symptoms can be a result of a limiting intake by the sows and an unstable flora.

### Test description:

By addition of 2 % of fermented wheat by-product to sow feed, a positive appreciable effect on all three symptoms was seen, both in sows fed with granule according to the invention and in sows fed with meal according to the invention. The number of piglets born alive increased, mortality at birth fell considerably and milk production increased appreciably.

As with the other animal tests, this minimal incorporation allowed us to reduce the energy and protein density of the feed, which was of benefit to the efficiency.

### Example 7: fryer feed

With fryers, intestinal health is extremely important. Indeed, once a disease breaks out in a fryer barn, it spreads rampantly throughout the barn. In tandem with this, a good litter quality is of great relevance to keeping the animals healthy for the duration of their short (only 6 weeks) production time.

Upon a disease outbreak, it is of crucial importance for a farm veterinarian to be able to act curatively immediately so as to curb the possible economic damage at a farm as fast as possible.

### Test description:

In a fryer barn, for 22,680 animals, from the start up to an age of 3 weeks, 2 % fermented wheat by-product was admixed in the classic feed being offered. This means that only 37.8 % of the total feed package was treated. These animals exhibited at the end of the fattening period more weight (+ 2.9 %), less feed consumption (- 3.0 %) and more efficient growth (+ 3.3 %). Litter quality of this barn was also positively influenced.

In a second sty, where round after round, wet litter is the rule, with all its adverse consequences, the classic feed for animals, from the start up to an age of 4 weeks (53.8 % of the total food package), was admixed with 2% fermented wheat by-product. The effect on the litter quality was particularly positive so that the animals accordingly provided a favorable yield.

### Example 8: laying hen feed

Efficient egg production (sufficient eggs per laying hen) of eggs of a desired egg weight combined with a sufficiently high but efficient feed intake is the key to success in this animal production branch. For years now, it has been quite difficult in laying hen farming to be able to continue to perform efficiently, certainly when at the same time all welfare regulations are to be complied with.

### Test description:

In a laying hen barn the classic feed was supplemented for two weeks with 2 % fermented wheat by-product. The feed intake dropped by 4.2 % but the egg weight rose slightly (0.5 %) and the feed consumption improved by 3.4 %, which shows that the animals have used their food nutrients more efficiently.

### Example 9: comparative test with food enriched with microorganisms without fermentation.

In a comparative test 2 wt. % of fermented wheat by-product according to the invention (as obtainable by Example 1) was incorporated in a baby piglet feed and supplied to a group of piglets and compared with a control group that were given the same baby piglet feed enriched with Actisaf (*Saccharomyces Cerevisiae), Enterococcus Faecium* and no fermentation products.

| | # piglets | Kg pig -let | % dead | kg/ head | kg feed | VC¹ | VC 7-40² | Growth g/day | Intake | Stalling Period |
|---|---|---|---|---|---|---|---|---|---|---|
| Control | 9433 | 6.2 | 2.09 | 26.1 | 34.0 | 1.703 | 1.83 | 382 | 0.65 | 52 |
| Invention | 9957 | 6.1 | 2.18 | 26.1 | 32.3 | 1.622 | 1.74 | 383 | 0.62 | 52 |

| | | | | | | | | | | |
|---|---|---|---|---|---|---|---|---|---|---|
| ¹VC = feed conversion ²VC7-40 = feed conversion standardized for 7-40 kg curve | | | | | | | | | | |

It was clearly noticeable that the group based on fermented wheat by-product according to the invention put up a stronger technical performance: these piglets exhibited a lower feed consumption (4.75 % more efficient) to arrive at the same final weight of 26.1 kg.

### Example 10 Dairy cattle tests

### 1. Response test in dairy cattle

Aim: finding the effect of administering the fermented wheat by-product (as obtainable by Example 1) on the ruminal fermentation and ruminal digestibility in fistulated cows.

The test food ingredient (obtainable according to Example 1) contains inter alia lactobacilli, which provide for a low concentration of lactic acid in the rumen. The theory (Nocek JE, Kautz WP, Leedle JAZ, Allman JG 2001. Ruminal supplementation of direct-fed microbials on diurnal pH variation and in situ digestion in dairy cattle. J. Dairy Sci. 85, 429-433) is now that in the constant presence of lactic acid in the rumen, the lactic acid utilizing organisms are stimulated, so that they can more rapidly process the acids that are formed upon carbohydrate degradation. As a result, strong pH drops would be avoided with a positive effect on digestibility. A reservation in this regard, however, is that a ration based on grass and corn silage, which contain on average 5% of lactic acid per kg of dry matter introduce much more lactic acid into the rumen that what is formed under normal circumstances upon the fermentation of carbohydrates (Knapp J 2012. Lactic acid has little impact on total ME. Feedstuffs 84, issue 28).

In an embodiment for ruminants, a food ingredient according to the invention would (partly) provide for a slowing of the protein degradation in the rumen. First, it is established what effect a fermented wheat bran according to the invention has on the ruminal fermentation (pH, ammonia, fatty acids) as well as the digestibility of the feed. For this reason, an experiment is carried out in which the product is given to four cows provided with a pin fistula.

### Implementation

The fermented wheat bran is incorporated in a balanced feed concentrate. The cows are given a basic ration of grass and corn silage (50/50 based on dry matter) supplemented with concentrate according to their needs for energy, protein and structure. The concentrate is supplied at milking at 7.30 h in the morning and 18 h in the evening; the roughage is given shortly after milking.

The experiment is carried out as a cross-over with 4 animals and 2 treatments (control feed without fermented wheat bran and test feed with fermented wheat bran) over periods of 3 weeks each, with observations at the end of each period.

### Observations

At the end of each period, over a period of 2 days ruminal fluid samples are taken just before the feed turn in the morning and again after 1.5h (at 9.00 am), 4h (at 11.30 am) and 8u (at 15.30 pm), respectively. On each sample, pH and ammonia are measured, to be able to derive a day profile. On the pooled samples per day, volatile fatty acids (acetic acid, propionic acid and butyric acid) and lactic acid are determined.

On the first of the two sampling days, in each cow 14 small bags filled with 5 g of a mixed feed, containing protein, starch and cell walls, are suspended in the rumen and after incubation for 3, 8, 24 and 48 h, 2, 3, 4 and 5 bags, respectively, are taken from the rumen for analysis of fluid, ash, crude protein, starch and fibres ('neutral detergent fibre', NDF). This allows ascertaining the effect of the fermented wheat bran on the degradability and degradation rate of the different nutrients.

During the last week of each period, at four milking turns, milk samples are taken for assaying fat, protein, lactose and urea with FTIR.

### 2. Practical experiment in dairy cattle

### Experimental setup

On a robot farm, with 2 robots and 120 cows, 2 stable groups (parity - days in lactation) are formed that have access to 1 robot each.

The cows on robot 1 are administered fermented wheat by-product in a low density (low protein and low energy) concentrate.

Animals on robot 2 serve as control farm and are administered the low density concentrate without fermented wheat by-product.

Gathered data from the robot and MPR (Milk Production Registration) are:
- Daily milk production
- BSK (Farm Standard Cow) and NO (Net Yield)
- KV intake
- Number of milking turns/number of refusals

In addition, in the two groups of animals, also manure samples are taken for analysis on starch digestibility of the ration.

Purpose of this setup is to measure whether significant differences are observed between cows that were fed fermented wheat by-product and control cows regarding milk production, milk quality = contents of protein, fat and bacterial content and/or regarding digestibility of the total ration.

### Test description:

In a fryer barn, for 22,680 animals, from the start up to an age of 3 weeks, 2 % fermented wheat by-product was admixed in the classic feed being offered. This means that only 37.8 % of the total feed package was treated. These animals exhibited at the end of the fattening period more weight (+ 2.9 %), less feed consumption (- 3.0 %) and more efficient growth (+ 3.3 %). Litter quality of this barn was also positively influenced.

In a second sty, where round after round, wet litter is the rule, with all its adverse consequences, the classic feed for animals, from the start up to an age of 4 weeks (53.8 % of the total food package), was admixed with 2% fermented wheat by-product. The effect on the litter quality was particularly positive so that the animals accordingly provided a favorable yield.

### Example 8: laying hen feed

Efficient egg production (sufficient eggs per laying hen) of eggs of a desired egg weight combined with a sufficiently high but efficient feed intake is the key to success in this animal production branch. For years now, it has been quite difficult in laying hen farming to be able to continue to perform efficiently, certainly when at the same time all welfare regulations are to be complied with.

### Test description:

In a laying hen barn the classic feed was supplemented for two weeks with 2 % fermented wheat by-product. The feed intake dropped by 4.2 % but the egg weight rose slightly (0.5 %) and the feed consumption improved by 3.4 %, which shows that the animals have used their food nutrients more efficiently.

### Example 9: comparative test with food enriched with microorganisms without fermentation.

In a comparative test 2 wt. % of fermented wheat by-product according to the invention (as obtainable by Example 1) was incorporated in a baby piglet feed and supplied to a group of piglets and compared with a control group that were given the same baby piglet feed enriched with Actisaf (*Saccharomyces Cerevisiae), Enterococcus Faecium* and no fermentation products.

| | # piglets | Kg pig -let | % dead | kg/ head | kg feed | VC¹ | VC 7-40² | Growth g/day | Intake | Stalling period |
|---|---|---|---|---|---|---|---|---|---|---|
| Control | 9433 | 6.2 | 2.09 | 26.1 | 34.0 | 1.703 | 1.83 | 382 | 0.65 | 52 |
| Invention | 9957 | 6.1 | 2.18 | 26.1 | 32.3 | 1.622 | 1.74 | 383 | 0.62 | 52 |

| | | | | | | | | | | |
|---|---|---|---|---|---|---|---|---|---|---|
| ¹VC = feed conversion ²VC7-40 = feed conversion standardized for 7-40 kg curve | | | | | | | | | | |

It was clearly noticeable that the group based on fermented wheat by-product according to the invention put up a stronger technical performance: these piglets exhibited a lower feed consumption (4.75 % more efficient) to arrive at the same final weight of 26.1 kg.

### Example 10 Dairy cattle tests

### 1. Response test in dairy cattle

Aim: finding the effect of administering the fermented wheat by-product (as obtainable by Example 1) on the ruminal fermentation and ruminal digestibility in fistulated cows.

The test food ingredient (obtainable according to Example 1) contains inter alia lactobacilli, which provide for a low concentration of lactic acid in the rumen. The theory (Nocek JE, Kautz WP, Leedle JAZ, Allman JG 2001. Ruminal supplementation of direct-fed microbials on diurnal pH variation and in situ digestion in dairy cattle. J. Dairy Sci. 85, 429-433) is now that in the constant presence of lactic acid in the rumen, the lactic acid utilizing organisms are stimulated, so that they can more rapidly process the acids that are formed upon carbohydrate degradation. As a result, strong pH drops would be avoided with a positive effect on digestibility. A reservation in this regard, however, is that a ration based on grass and corn silage, which contain on average 5% of lactic acid per kg of dry matter introduce much more lactic acid into the rumen that what is formed under normal circumstances upon the fermentation of carbohydrates (Knapp J 2012. Lactic acid has little impact on total ME. Feedstuffs 84, issue 28).

In an embodiment for ruminants, a food ingredient according to the invention would (partly) provide for a slowing of the protein degradation in the rumen. First, it is established what effect a fermented wheat bran according to the invention has on the ruminal fermentation (pH, ammonia, fatty acids) as well as the digestibility of the feed. For this reason, an experiment is carried out in which the product is given to four cows provided with a pin fistula.

### Implementation

The fermented wheat bran is incorporated in a balanced feed concentrate. The cows are given a basic ration of grass and corn silage (50/50 based on dry matter) supplemented with concentrate according to their needs for energy, protein and structure. The concentrate is supplied at milking at 7.30 h in the morning and 18 h in the evening; the roughage is given shortly after milking.

The experiment is carried out as a cross-over with 4 animals and 2 treatments (control feed without fermented wheat bran and test feed with fermented wheat bran) over periods of 3 weeks each, with observations at the end of each period.

### Observations

At the end of each period, over a period of 2 days ruminal fluid samples are taken just before the feed turn in the morning and again after 1.5h (at 9.00 am), 4h (at 11.30 am) and 8u (at 15.30 pm), respectively. On each sample, pH and ammonia are measured, to be able to derive a day profile. On the pooled samples per day, volatile fatty acids (acetic acid, propionic acid and butyric acid) and lactic acid are determined.

On the first of the two sampling days, in each cow 14 small bags filled with 5 g of a mixed feed, containing protein, starch and cell walls, are suspended in the rumen and after incubation for 3, 8, 24 and 48 h, 2, 3, 4 and 5 bags, respectively, are taken from the rumen for analysis of fluid, ash, crude protein, starch and fibres ('neutral detergent fibre', NDF). This allows ascertaining the effect of the fermented wheat bran on the degradability and degradation rate of the different nutrients.

During the last week of each period, at four milking turns, milk samples are taken for assaying fat, protein, lactose and urea with FTIR.

### 2. Practical experiment in dairy cattle

### Experimental setup

On a robot farm, with 2 robots and 120 cows, 2 stable groups (parity - days in lactation) are formed that have access to 1 robot each.

The cows on robot 1 are administered fermented wheat by-product in a low density (low protein and low energy) concentrate.

Animals on robot 2 serve as control farm and are administered the low density concentrate without fermented wheat by-product.

Gathered data from the robot and MPR (Milk Production Registration) are:
- Daily milk production
- BSK (Farm Standard Cow) and NO (Net Yield)
- KV intake
- Number of milking turns/number of refusals

In addition, in the two groups of animals, also manure samples are taken for analysis on starch digestibility of the ration.

Purpose of this setup is to measure whether significant differences are observed between cows that were fed fermented wheat by-product and control cows regarding milk production, milk quality = contents of protein, fat and bacterial content and/or regarding digestibility of the total ration.

## Claims

1. A method for preparing a food product, which food product is a mixed feed, comprising a protein, a fat, a carbohydrate, a fibre, lactic acid, colony-forming *Lactobacillus casei* bacteria, colony forming *Lactobacillus plantarum* bacteria, and colony-forming *Saccharomyces cerevisiae* yeast cells, wherein a food ingredient is obtained in a method comprising:
- providing a mixture of a starch-, protein-, and dietary fibre-containing food base material, which base material is a gliadin- and/or glutenin-containing grain and/or grain by-product, water, the colony-forming *Saccharomyces cerevisiae* yeast cells, the colony-forming *Lactobacillus casei* bacteria, the colony forming *Lactobacillus plantarum* bacteria and optionally one or more other ingredients; and
- subjecting said mixture to a fermentation step, wherein the fermentation is continued until the pH, as measured in the mixture with a pH electrode, is less than 4.00, thereby forming lactic acid,
wherein a pumpable food ingredient is obtained having a dry matter content of from approximately 20 wt. % to approximately 35 wt, % and a viscosity of at least 10,000 mPa.s (cP) as measurable utilizing a rotation Viscosimeter at a temperature of 25 °C; and
wherein the food ingredient is mixed with other ingredients, thereby obtaining the food product.

2. The method according to claim 1, wherein the pumpable food ingredient has a dry matter content of from approximately 22 wt. % to approximately 30 wt. %, preferably from approximately 25 wt. % to approximately 28 wt. %.

3. The method according to claim 1 or 2, wherein the mixture that is subjected to fermentation contains food base material and water in a weight ratio of food base material : water in the range of from 1: 1 to 1:5, preferably from 1:2 to 1:4, in particular of 1:3.

4. The method according to any one of the preceding claims, wherein the food base material content in the mixture is 20-50 wt. %, preferably 22-25 wt. %, in particular 25-30 wt. %.

5. The method according to any one of the preceding claims, wherein the food base material comprises bran, which bran is known in Dutch as "kortmeel".

6. The method according to any one of the preceding claims, wherein the pumpable food ingredient has a viscosity of 15000-50000 mPa, as measured using a rotation viscosimeter at a temperature of 25°C.

7. The method according to any of the preceding claims, wherein the food ingredient comprises
- a protein content of 10-30 wt. %, preferably 12-25 wt. %, based on dry matter;
- a fat content of 1-11 wt. %, preferably 3-8 wt. %, based on dry matter;
- a digestible carbohydrate content of 14-44 wt. %, preferably 18-33 wt. %, based on dry matter;
- a total mineral matter content of 1-11 wt. %, preferably 3-8 wt. %, based on dry matter;
- a fibre content of 6-24 wt. %, preferably 8-18 wt. %, based on dry matter, and further
- at least 1 wt. %, drawn to the food ingredient, of lactic acid, preferably 2-10 wt. % of lactic acid;
- colony forming lactic acid bacteria; and
- colony forming yeast cells.

8. The method according to any one of the preceding claims, wherein the ingredients for the food are mixed, then subjected to an expansion step and then pressed, thereby obtaining a pressed food product.

9. The method according to any of the preceding claims, wherein the food product is a mixed farmed animal feed.

10. The method according to any of the preceding claims, wherein fermented food ingredient is subjected to drying prior to mixing with any other food ingredient(s).

11. The method according to any of the preceding claims, wherein the fermented food ingredient is dried and/or processed to form a granular, powdered or pelleted food ingredient.

12. The method according to any of the preceding claims, wherein the grain or grain by-product is selected from the group of wheat, rye, barley, spelt, wheat by-product, rye by-product, barley by-product and spelt by-product.

13. A food product, which food product is a mixed animal feed, preferably a mixed farmed animal feed, comprising a protein, a fat, a carbohydrate, a fibre, colony-forming *Saccharomyces cerevisiae* yeast cells, colony-forming *Lactobacillus casei* bacteria, colony forming *Lactobacillus plantarum* bacteria , and 0.01-0.5 wt.% of lactic acid, based on total weight, which mixed feed is obtainable by a method according to any of the preceding claims.

14. A food product according to claim 13, wherein the food ingredient has been mixed in a content of 0.1-5 wt. %, in particular 0.5-4 wt. % of food ingredient drawn to the total weight of the food product.

15. A food product according to claim 13 and/or 14, comprising
- at least 0.5 x 10⁵ colony-forming lactic acid bacteria units per gram of food,
- at least 0.5 x 10³ colony-forming yeast cell units per gram of food.

16. The food product according to claim 15, comprising
- 0.05-0.5 wt. % of lactic acid,
- 1 x 10⁵ to 160 x 10⁵ colony-forming lactic acid bacteria units per gram of food, in particular from 5 x 10⁵ to 100 x 10⁵,- 1 x 10³ to 160 x 10³ colony-forming yeast cell units per gram of food, in particular from 5 x 10³ to 100 x 10^{3.}

17. The food product according to claim 13, 14, 15 and/or 16, wherein the food product is a powder, granulate or pellet-shaped mixed feed.

18. The food product according to any of the claims 13-17, wherein the food product comprises fermented gliadin- and/or glutenin-containing wheat bran, which wheat bran is known in Dutch as " tarwe kortmeel".

19. Non-therapeutic use of a food product according to any one of claims 13-18:
- in farming for increasing the reproduction capacity, for increasing the growth rate, for increasing the meat production rate, for increasing the birth weight uniformity;
- in farming for reducing the nitrogen emission;
- in farming for reducing the use of medicaments, such as antibiotics; and/or
- as an administration form for a probiotic.

20. The food product according to any one of claims 13-18 for use in a prophylactic or therapeutic medical treatment of an animal.

21. The food product for use according to claim 20, wherein the food product is intended for increasing intestinal health.

22. A non-therapeutic method for producing a product, which product is meat, wherein
a farmed animal is fed with a food product according to any one of claims 13-18, and the animal, after sufficient growth, is slaughtered, the meat being thereby obtained.

## Patentansprüche

1. Verfahren zur Herstellung eines Nahrungsmittelprodukts, wobei das Nahrungsmittelprodukt ein Mischfutter ist, umfassend ein Protein, ein Fett, ein Kohlenhydrat, eine Faser, Milchsäure, koloniebildende *Lactobacillus-casei*-Bakterien, koloniebildende *Lactobacillus-plantarum-*Bakterien und koloniebildende *Saccharomyces-cerevisiae-*Hefezellen*,* wobei ein Nahrungsmittelbestandteil in einem Verfahren erhalten wird, umfassend:
- Bereitstellen einer Mischung aus einem stärke-, protein- und ballaststoffhaltigen Nahrungsmittelgrundmaterial, wobei der Grundstoff ein gliadin- und/oder gluteninhaltiges Getreide und/oder Getreidenebenprodukt ist, Wasser, den koloniebildenden *Saccharomyces-cerevisiae-*Hefezellen*,* den koloniebildenden *Lactobacillus-casei-*Bakterien*,* den koloniebildenden *Lactobacillus-plantarum-*Bakterien und optional einer oder mehrerer anderer Zutaten; und
- Unterziehen der Mischung einem Fermentationsschritt, wobei die Fermentation fortgesetzt wird, bis der pH-Wert, gemessen in der Mischung mit einer pH-Elektrode, weniger als 4,00 ist, wodurch Milchsäure gebildet wird,
wobei eine pumpbare Nahrungsmittelzutat mit einem Trockengehalt von von etwa 20 Gew.-% bis etwa 35 Gew.-% und einer Viskosität von mindestens 10 000 mPa.s (cP) wie unter Verwendung eines Rotationsviskosimeters bei einer Temperatur von 25 °C messbar, erhalten wird; und
wobei die Nahrungsmittelzutat mit anderen Zutaten gemischt wird, wodurch das Nahrungsmittelprodukt erhalten wird.

2. Verfahren nach Anspruch 1, wobei die pumpbare Nahrungsmittelzutat einen Trockengehalt von von etwa 22 Gew.-% bis etwa 30 Gew.-%, vorzugsweise von etwa 25 Gew.-% bis etwa 28 Gew.-%, hat.

3. Verfahren nach Anspruch 1 oder 2, wobei die Mischung, die der Fermentation unterzogen wird, Nahrungsmittelgrundmaterial und Wasser in einem Gewichtsverhältnis von Nahrungsmittelgrundmaterial : Wasser im Bereich von von 1:1 bis 1:5, vorzugsweise von 1:2 bis 1:4, insbesondere von 1:3 enthält.

4. Verfahren nach einem der vorhergehenden Ansprüche, wobei der Gehalt an Nahrungsmittelgrundmaterial in der Mischung 20-50 Gew.-%, vorzugsweise 22-25 Gew.-%, insbesondere 25-30 Gew.-% ist.

5. Verfahren nach einem der vorhergehenden Ansprüche, wobei das Nahrungsmittelgrundmaterial Kleie umfasst, wobei Kleie im Niederländischen als "kortmeel" bekannt ist.

6. Verfahren nach einem der vorhergehenden Ansprüche, wobei die pumpbare Nahrungsmittelzutat eine Viskosität von 15 000-50 000 mPa hat, wie gemessen unter Verwendung eines Rotationsviskosimeters bei einer Temperatur von 25 °C.

7. Verfahren nach einem der vorhergehenden Ansprüche, wobei die Nahrungsmittelzutat umfasst:
- einen Proteingehalt von 10-30 Gew.-%, vorzugsweise 12-25 Gew.-%, basierend auf Trockenmasse;
- einen Fettgehalt von 1-11 Gew.-%, vorzugsweise 3-8 Gew.-%, basierend auf Trockenmasse;
- einen Gehalt an verdaulichen Kohlenhydraten von 14-44 Gew.-%, vorzugsweise 18-33 Gew.-%, basierend auf Trockenmasse;
- einen Gesamtmineralstoffgehalt von 1-11 Gew.-%, vorzugsweise 3-8 Gew.-%, basierend auf Trockenmasse;
- einen Fasergehalt von 6-24 Gew.-%, vorzugsweise 8-18 Gew.-%, basierend auf Trockenmasse, und ferner
- mindestens 1 Gew.-%, bezogen auf die Nahrungsmittelzutat, Milchsäure, vorzugsweise 2-10 Gew.-% Milchsäure;
- koloniebildende Milchsäurebakterien; und
- koloniebildende Hefezellen.

8. Verfahren nach einem der vorhergehenden Ansprüche, wobei die Zutaten für das Nahrungsmittel gemischt, dann einem Expansionsschritt unterzogen und anschließend gepresst werden, um dadurch ein gepresstes Nahrungsmittelprodukt zu erhalten.

9. Verfahren nach einem der vorhergehenden Ansprüche, wobei das Nahrungsmittelprodukt ein Mischfutter für Nutztiere ist.

10. Verfahren nach einem der vorhergehenden Ansprüche, wobei die fermentierte Nahrungsmittelzutat dem Trocknen vor dem Mischen mit (einer) anderen Nahrungsmittelzutat(en) unterzogen wird.

11. Verfahren nach einem der vorhergehenden Ansprüche, wobei die fermentierte Nahrungsmittelzutat getrocknet und/oder verarbeitet wird, um eine granulare, pulverförmige oder pelletierte Nahrungsmittelzutat zu bilden.

12. Verfahren nach einem der vorhergehenden Ansprüche, wobei das Getreide oder das Getreidennebenprodukt ausgewählt ist aus der Gruppe von Weizen, Roggen, Gerste, Dinkel, Weizennebenprodukt, Roggennebenprodukt, Gerstennebenprodukt und Dinkelnebenprodukt.

13. Nahrungsmittelprodukt, wobei das Nahrungsmittelprodukt ein Mischfutter für Tiere ist, vorzugsweise ein Mischfutter für Nutztiere, umfassend ein Protein, ein Fett, ein Kohlenhydrat, eine Faser, koloniebildende *Saccharomyces-cerevisiae-*Hefezellen*,* koloniebildende *Lactobacillus-casei-*Bakterien, koloniebildende *Lactobacillus-plantarum-*Bakterien und 0,01-0,5 Gew.-% Milchsäure, basierend auf dem Gesamtgewicht, wobei das Mischfutter erhältlich ist durch ein Verfahren nach einem der vorhergehenden Ansprüche.

14. Nahrungsmittelprodukt nach Anspruch 13, wobei die Nahrungsmittelzutat in einem Gehalt von 0,1-5 Gew.-%, insbesondere 0,5-4 Gew.-% der Nahrungsmittelzutat, bezogen auf das Gesamtgewicht des Nahrungsmittelprodukts, gemischt worden ist.

15. Nahrungsmittelprodukt nach Anspruch 13 und/oder 14, umfassend:
- mindestens 0,5 x 10⁵ koloniebildende Milchsäurebakterieneinheiten pro Gramm Nahrungsmittel,
- mindestens 0,5 x 10³ koloniebildende Hefezelleneinheiten pro Gramm Nahrungsmittel.

16. Nahrungsmittelprodukt nach Anspruch 15, umfassend:
- 0,0,5-0,5 Gew.-% Milchsäure,
- 1 x 10⁵ bis 160 x 10⁵ koloniebildende Milchsäurebakterieneinheiten pro Gramm Nahrungsmittel, insbesondere von 5 x 10⁵ bis 100 x 10⁵,- 1 x 10³ bis 160 x 10³ koloniebildende Hefezelleinheiten pro Gramm Nahrungsmittel, insbesondere von 5 x 10³ bis 100 x 10³.

17. Nahrungsmittelprodukt nach Anspruch 13, 14, 15 und/oder 16, wobei das Nahrungsmittelprodukt ein pulverförmiges, granulares oder pelletförmiges Mischfutter ist.

18. Nahrungsmittelprodukt nach einem der Ansprüche 13-17, wobei das Nahrungsmittelprodukt fermentierte gliadin- und/oder gluteninhaltige Weizenkleie umfasst, wobei die Weizenkleie im Niederländischen als "tarwe kortmeel" bekannt ist.

19. Nicht-therapeutische Verwendung eines Nahrungsmittelprodukts nach einem der Ansprüche 13-18:
- in der Landwirtschaft zur Erhöhung der Reproduktionskapazität, zur Erhöhung der Wachstumsrate, zur Erhöhung der Fleischproduktionsrate, zur Erhöhung der Einheitlichkeit des Geburtsgewichts;
- in der Landwirtschaft zur Reduzierung der Stickstoffemissionen;
- in der Landwirtschaft zur Reduzierung der Verwendung von Medikamenten, wie Antibiotika; und/oder
- als Verabreichungsform für ein Probiotikum.

20. Nahrungsmittelprodukt nach einem der Ansprüche 13-18 zur Verwendung in einer prophylaktischen oder therapeutischen medizinischen Behandlung eines Tieres.

21. Nahrungsmittelprodukt nach Anspruch 20, wobei das Nahrungsmittelprodukt zur Erhöhung der Darmgesundheit bestimmt ist.

22. Nicht-therapeutisches Verfahren zur Herstellung eines Produkts, wobei das Produkt Fleisch ist, wobei
ein Nutztier mit einem Nahrungsmittelprodukt nach einem der Ansprüche 13 bis 18 gefüttert wird, und das Tier nach ausreichendem Wachstum geschlachtet wird, wodurch das Fleisch erhalten wird.

## Revendications

1. Procédé de préparation d'un produit alimentaire, lequel produit alimentaire est un aliment composé, comprenant une protéine, une matière grasse, un glucide, une fibre, de l'acide lactique, des bactéries *Lactobacillus casei* formant des colonies, des bactéries *Lactobacillus plantarum* formant des colonies et des cellules de levure *Saccharomyces cerevisiae* formant des colonies, dans lequel un ingrédient alimentaire est obtenu par un procédé comprenant :
- la fourniture d'un mélange d'une matière de base alimentaire contenant de l'amidon, des protéines et des fibres alimentaires, laquelle matière de base est une céréale et/ou un sous-produit céréalier contenant de la gliadine et/ou de la gluténine, d'eau, des cellules de levure *Saccharomyces cerevisiae* formant des colonies, des bactéries *Lactobacillus plantarum* formant des colonies et éventuellement un ou plusieurs autres ingrédients ; et
- la soumission dudit mélange à une étape de fermentation, la fermentation étant poursuivie jusqu'à ce que le pH, tel que mesuré dans le mélange avec une électrode de pH, soit inférieur à 4,00, entraînant ainsi la formation d'acide lactique,
dans lequel un ingrédient alimentaire pompable est obtenu avec une teneur en matière sèche d'environ 20 % en poids à environ 35 % en poids et une viscosité d'au moins 10 000 mPa (cP) telle que mesurable à l'aide d'un viscosimètre rotatif à une température de 25 °C ; et
dans lequel l'ingrédient alimentaire est mélangé avec d'autres ingrédients, obtenant ainsi le produit alimentaire.

2. Procédé selon la revendication 1, dans lequel l'ingrédient alimentaire pompable a une teneur en matière première alimentaire d'environ 22 % en poids à environ 30 % en poids, de préférence d'environ 25 % en poids à environ 28 % en poids.

3. Procédé selon la revendication 1 ou 2, dans lequel le mélange qui est soumis à la fermentation contient la matière de base alimentaire et l'eau selon un rapport pondéral de matière de base alimentaire:eau compris dans la plage allant de 1:1 à 1:5, de préférence de 1:2 à 1:4, et en particulier de 1:3.

4. Procédé selon l'une quelconque des revendications précédentes, dans lequel la teneur en matière de base alimentaire dans le mélange est de 20 à 50 % en poids, de préférence de 22 à 25 % en poids, en particulier de 25 à 30 % en poids.

5. Procédé selon l'une quelconque des revendications précédentes, dans lequel la matière de base alimentaire comprend du son, lequel son est connu en néerlandais sous le nom de « kortmeel ».

6. Procédé selon l'une quelconque des revendications précédentes, dans lequel l'ingrédient alimentaire pompable a une viscosité de 15 000 à 50 000 mPa, telle que mesurée à l'aide d'un viscosimètre rotatif à une température de 25 °C.

7. Procédé selon l'une quelconque des revendications précédentes, dans lequel l'ingrédient alimentaire comprend :
- une teneur en protéines de 10 à 30 % en poids, de préférence de 12 à 25 % en poids, en se basant sur la matière sèche ;
- une teneur en matières grasses de 1 à 11 % en poids, de préférence de 3 à 8 % en poids, en se basant sur la matière sèche ;
- une teneur en glucides digestibles de 14 à 44 % en poids, de préférence de 18 à 33 % en poids, en se basant sur la matière sèche ;
- une teneur totale en matières minérales de 1 à 11 % en poids, de préférence de 3 à 8 % en poids, en se basant sur la matière sèche ;
- une teneur en fibres de 6 à 24 % en poids, de préférence de 8 à 18 % en poids, en se basant sur la matière sèche, et en outre
- au moins 1 % en poids, par rapport à l'ingrédient alimentaire, d'acide lactique, de préférence de 2 à 10 % en poids d'acide lactique ;
- des bactéries d'acide lactique formant des colonies ; et
- des cellules de levure formant des colonies.

8. Procédé selon l'une quelconque des revendications précédentes, dans lequel les ingrédients pour l'aliment sont mélangés, puis soumis à une étape d'expansion et ensuite compressés, obtenant ainsi un produit alimentaire compressé.

9. Procédé selon l'une quelconque des revendications précédentes, dans lequel le produit alimentaire est un aliment composé pour animaux d'élevage.

10. Procédé selon l'une quelconque des revendications précédentes, dans lequel le produit alimentaire fermenté est soumis à un séchage avant le mélange avec un quelconque ou plusieurs autres ingrédients alimentaires.

11. Procédé selon l'une quelconque des revendications précédentes, dans lequel le produit alimentaire fermenté est séché et/ou transformé pour former un ingrédient alimentaire sous forme granulaire, de poudre ou compacté en granulés.

12. Procédé selon l'une quelconque des revendications précédentes, dans lequel la céréale ou le sous-produit céréalier est choisi dans le groupe constitué par le blé, le seigle, l'orge, l'épeautre, un sous-produit de blé, un sous-produit de seigle, un sous-produit d'orge et un sous-produit d'épeautre.

13. Produit alimentaire, lequel produit alimentaire est un produit composé pour animaux, de préférence un produit composé pour animaux d'élevage, comprenant une protéine, une matière grasse, un glucide, une fibre, des cellules de levure *Saccharomyces cerevisiae* formant des colonies, des bactéries *Lactobacillus casei* formant des colonies, des bactéries *Lactobacillus plantarum* formant des colonies, et de 0,01 à 0,5 % en poids d'acide lactique, en se basant sur le poids total, lequel aliment composé peut être obtenu par un procédé selon l'une quelconque des revendications précédentes.

14. Produit alimentaire selon la revendication 13, dans lequel l'ingrédient alimentaire a été mélangé à une teneur de 0,1 à 5 % en poids, en particulier de 0,5 à 4 % en poids d'ingrédient alimentaire par rapport au poids total du produit alimentaire.

15. Produit alimentaire, selon la revendication 13 et/ou 14, comprenant
- au moins 0,5 x 10⁵ unités de bactéries d'acide lactique formant des colonies par gramme d'aliment,
- au moins 0,5 x 10³ unités de cellules de levure formant des colonies par gramme d'aliment.

16. Produit alimentaire, selon la revendication 15, comprenant
- 0,05 à 0,5 % en poids d'acide lactique,
- 1 x 10⁵ à 160 x 10⁵ unités de bactéries d'acide lactique formant des colonies par gramme d'aliment, en particulier 5 x 10⁵ à 100 x 10⁵,
- 1 x 10³ à 160 x 10³ unités de cellules de levure formant des colonies par gramme d'aliment, en particulier 5 x 10³ à 100 x 10³.

17. Produit alimentaire, selon la revendication 13, 14, 15 et/ou 16, dans lequel le produit alimentaire est un aliment composé sous forme de poudre, de granulés ou de pastilles.

18. Produit alimentaire selon l'une quelconque des revendications 13 à 17, dans lequel le produit alimentaire comprend du son de blé fermenté contenant de la gliadine ou de la gluténine, lequel son de blé est connu en néerlandais sous le nom de « tarwe kortmeel ».

19. Utilisation non thérapeutique d'un produit alimentaire selon l'une quelconque des revendications 13 à 18 :
- dans l'agriculture pour augmenter la capacité de reproduction, pour augmenter le taux de croissance, pour augmenter le rendement de production de viande, pour augmenter l'uniformité de poids de naissance ;
- dans l'agriculture pour réduire les émissions d'azote ;
- dans l'agriculture pour réduire l'utilisation de médicaments, tels que des antibiotiques ; et/ou
- comme forme d'administration pour un probiotique.

20. Produit alimentaire selon l'une quelconque des revendications 13 à 18 pour une utilisation dans un traitement médical prophylactique ou thérapeutique d'un animal.

21. Produit alimentaire pour une utilisation selon la revendication 20, dans lequel le produit alimentaire est destiné à améliorer la santé intestinale.

22. Procédé non thérapeutique de production d'un produit, lequel produit est de la viande, dans lequel
un animal d'élevage est nourri avec un produit alimentaire selon l'une quelconque des revendications 13 à 18, et l'animal, après une croissance suffisante, est abattu, la viande étant ainsi obtenue.
